# EUROPEAN PATENT SPECIFICATION

(11) **EP 3 235 732 B1**
(45) Date of publication and mention of the grant of the patent: **12.06.2019**
(21) Application number: 17164297.8
(22) Date of filing: 31.03.2017
(51) Int. Cl.: B64D 15/00, B64D 15/16

(54) **PNEUMATIC DE-ICER WITH SENSOR FOR SUPERCOOLED LARGE DROPLET ICING DETECTION**
LUFTENTEISER MIT SENSOR ZUR DETEKTION EINER VEREISUNG MIT UNTERKÜHLTEN GROSSEN TROPFEN
DÉGIVREUR DE PNEUMATIQUE DOTÉ D'UN CAPTEUR DE DÉTECTION DE GIVRAGE DES GOUTTELETTES DE GRANDE TAILLE EN SURFUSION

(30) Priority: 01.04.2016 US 201615088847
(43) Date of publication of application: 25.10.2017
(73) Proprietor: Goodrich Corporation, Charlotte, NC 28217-4578 (US)
(72) Inventor: PUTT, James C., Doylestown, OH 44230 (US)
(74) Representative: Dehns

(56) References cited:
- EP-A2- 0 806 342
- WO-A1-95/34189
- US-A1- 2013 175 396

## Description

### BACKGROUND

The present invention relates generally to ice protection systems, and more specifically to ice protection systems for aircraft which detect supercooled large droplet ("SLD") icing conditions.

Conventional ice protection systems (e.g., pneumatic de-icers and heated leading edges) do not provide sufficient coverage to protect against SLD ice accumulation aft of the region protected by conventional ice protection systems, which poses a hazard to safe flight by increasing drag, increasing weight, and decreasing lift of an airfoil experiencing SLD icing conditions. Existing SLD sensors require modification of the aircraft skin and some type of mechanical attachment which can reduce the structural integrity and aerodynamic performance of the aircraft element upon which the sensor is located. EP0806342 A2 relates to a pneumatic deicing system having an ice detection circuit using sensors with protection for supercooled large droplet ice.

### SUMMARY

A de-cing assembly includes an aircraft with an airfoil. A de-icer is disposed on a leading edge of the airfoil. A tab extends from the de-icer in an aft direction from an aft edge of the de-icer. The de-icer and the tab are adhesively attached onto an outer skin of the airfoil. A supercooled large droplet sensor is built into the tab. The supercooled large droplet sensor is positioned in a location aft of the aft edge of the de-icer.

A method of installing a de-icing assembly includes positioning a supercooled large droplet sensor inside of a tab attached to a de-icer. The de-icer is adhered to a leading edge of an airfoil of an aircraft. The tab of the de-icer is adhered to the airfoil concurrently with an adhesion of the de-icer to the airfoil. Adhering the tab includes positioning the supercooled large droplet sensor in a region aft of an aft edge of the de-icer.

A de-icing assembly includes a de-icer configured to be disposed on a leading edge of an airfoil. A tab extends from the de-icer in an aft direction from an aft edge of the de-icer. A supercooled large droplet sensor is built into the tab. The supercooled large droplet sensor is positioned in a location aft of the aft edge of the de-icer. An adhesive is applied to the de-icer and the tab.

The present summary is provided only by way of example, and not limitation. Other aspects of the present disclosure will be appreciated in view of the entirety of the present disclosure, including the entire text, claims and accompanying figures.

### BRIEF DESCRIPTION OF THE DRAWINGS

FIG. 1 is a perspective view of an aircraft.
FIG. 2 is a perspective cut-away view of a pneumatic de-icer with a SLD sensor which is attached to a leading edge of an aircraft wing.
FIG. 3 is a sectional view of pneumatic de-icer with the SLD sensor which is attached to the leading edge of the aircraft wing, taken along line 3-3 of FIG. 2.
FIG. 4 is a perspective cut-away view of a pneumatic de-icer with a SLD sensor which is attached to a leading edge of an aircraft horizontal stabilizer.

While the above-identified figures set forth embodiments of the present invention, other embodiments are also contemplated, as noted in the discussion. In all cases, this disclosure presents the invention by way of representation and not limitation. It should be understood that numerous other modifications and embodiments can be devised by those skilled in the art, which fall within the scope of the invention as defined by the claims. The figures may not be drawn to scale, and applications and embodiments of the present invention may include features, steps and/or components not specifically shown in the drawings.

### DETAILED DESCRIPTION

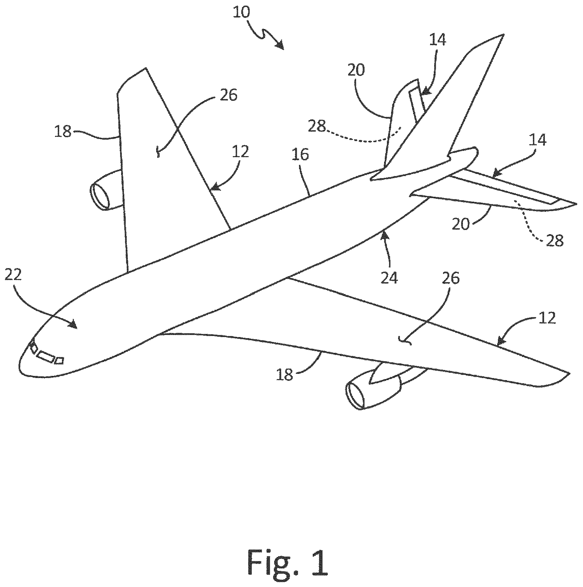

FIG. 1 is a perspective view of aircraft 10 including wings 12, horizontal stabilizers 14, and fuselage 16. Wings 12 include leading edges 18 and horizontal stabilizers 14 include leading edges 20. In the illustrated configuration of FIG. 1, aircraft 10 is of a fixed-wing design. Fuselage 16 extends from nose section 22 to tail section 24, with wings 12 fixed to fuselage 16 between nose section 22 and tail section 24. Horizontal stabilizers 14 are attached to fuselage 16 on tail section 24. Wings 12 and horizontal stabilizers 14 function to create lift and to prevent pitching, respectively, for aircraft 10. Wings 12 and horizontal stabilizers 14 include critical suction surfaces, such as upper surfaces 26 of wings 12 and lower surfaces 28 of horizontal stabilizers 14, where flow separation and loss of lift can occur if icing conditions form on any of the surfaces of wings 12 and horizontal stabilizers 14.

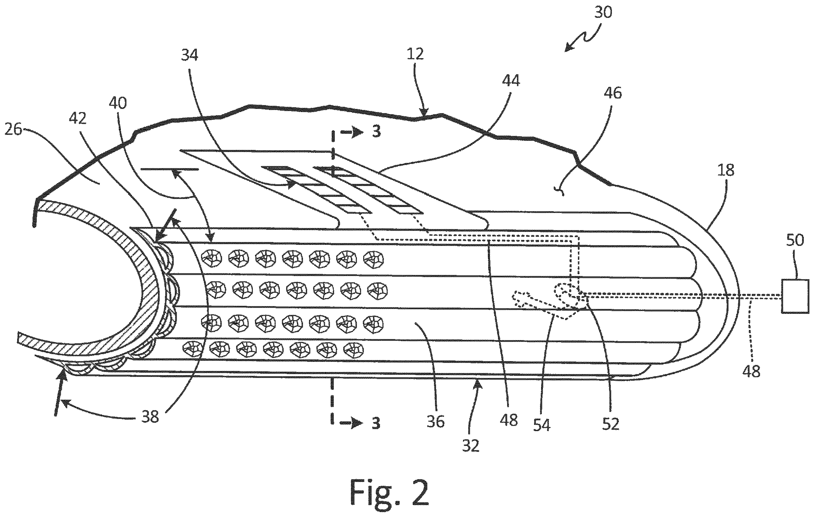

FIG. 2 is a perspective cut-away view of de-cing assembly 30 with de-icer 32 and supercooled large droplet ("SLD") sensor 34 attached to leading edge 18 of wing 12. As can be seen in FIG. 2, de-icer 32 includes a pneumatic de-icer with tubes 36 that extend spanwise across leading edge 18 of wing 12. De-icer 32 protects against formation of ice along leading edge 18 of wing 12. Formation of ice along leading edge 18 of wing 12 poses a potential hazard to safe flight by increasing drag, increasing weight, and decreasing lift of wing 12.

The example pneumatic de-icer discussed here is described in U.S. Pat. No. 5,337,978 to Fahrner et al. entitled "Leading Edge Pneumatic Deicer Assembly" and issued August 16, 1994. De-icing assembly 26 could additionally or alternatively employ other types of ice protection devices (e.g., pneumatic thermal devices, electro-impulse systems, pneumatic boots, etc.).

De-icer 32 extends in a chordwise direction across protected region 38. Protected region 38 includes a span of coverage or protection of de-icer 32 and includes an area of wing 12 that is protected from icing conditions. Unprotected region 40 extends in an aft direction from protected region 38, and includes a region of wing 12 located aft of aft edge 42 of de-icer 32 that is unprotected from icing conditions. Unprotected region 40 includes an area on wing 12 that is susceptible to ice build-up resulting from flight in SLD icing conditions because de-icer 32 is positioned on leading edge 18 of wing 12 and does not extend into unprotected region 40.

Tab 44 is attached to or integrally formed with de-icer 32 and extends from de-icer 32 in an aft direction from aft edge 42 of de-icer 32 and into unprotected region 40 of wing 12. De-icer 32 and tab 44 are adhesively attached onto outer skin 46 of wing 12. In one example, liquid cement is applied to both de-icer 32 and to outer skin 46 of wing 12 and then de-icer 32 is pressed to outer skin 46 of wing 12. In another example, a pressure sensitive adhesive is applied to de-icer 32 and the during installation of de-icer to outer skin 46 of wing 12, a release film covering the pressure sensitive adhesive is removed and de-icer 32 is pressed to outer skin 46 of wing 12. In further embodiments, the type of adhesion can vary to include other types of adhesives and/or methods of adhesion as desired for particular embodiments.

SLD sensor 34 is built into tab 44 by positioning SLD sensor 34 inside of tab 44. SLD sensor 34 is positioned in unprotected region 40 which is located aft of aft edge 42 of de-icer 32. Unprotected region 40 can be located on upper surface 26 of wing 12, and can additionally or alternatively be located on lower surfaces of horizontal stabilizers 14. The importance of locating SLD sensor 34 in either of these two locations is due to upper surface 26 of wing 12 and lower surface 28 of horizontal stabilizer 14 being critical aerodynamic surfaces where formation of SLD icing conditions could result in hazardous flight conditions. Upper surface 26 of wing 12 is a critical suction surface where flow separation and loss of lift can occur if ice forms aft of protected region 38 due to flight in SLD conditions. Additionally, SLD sensor 34 can be positioned along an underside of tab 44 or along a top side of tab 44.

SLD sensor 34 can comprise any suitable detecting technology capable of sensing SLD icing conditions. For example, SLD sensor 34 can comprise cloud-responsive heating elements, vibrating probes which change frequency with ice accretion, optical mechanisms, temperature-maintaining resistors, clog-with-ice conduits, ice-thickness-changes-impedance arrangements of electrodes, acoustic channels, and/or piezoelectric film arrays such as discussed in U.S. Pat. Application No. 2013/0284856 to Botura et al. entitled "Aircraft Ice Protection Optimization Based On Ice-Detection Input" and filed April 26, 2013.

Wires 48 connect SLD sensor 34 to electrical system 50 of aircraft 10. Wires 48 extend from SLD sensor 34, through tab 44, underneath de-icer 32, and are fed through air supply port 52 in outer skin 46 of wing 12. Air supply port 52 is used to supply pressurized air or vacuum from air supply 54 or a vacuum supply to de-icer 32. Wires 48 transmit signals from SLD sensor 34 to aircraft 10 to communicate the presence of SLD icing conditions in unprotected region 38 of wing 12 in order to alert a flight crew of the dangerous flight condition(s). Electrical system 50 is capable of monitoring SLD sensor 34 and providing annunciation to the flight crew of an unsafe condition.

De-icing assembly 26 can provide a single article that will have the combined ice protection and detection functionality of providing ice protection required by 14CFR 23/25.1419 (part 25 Appendix C) for flight into icing, as well as meet the new requirements for SLD icing condition detection required by 14 CFR25.1420 (part 25 Appendix O) for part 25 aircraft, and as expected to be required by pending regulation 14 CFR 23.230 for part 23 aircraft. De-icing assembly 26 also provides SLD sensor 34 being located in unprotected region 40 without modification of outer skin 46 (e.g., placement of SLD sensor 34 does not require a second hole in outer skin 46 in addition to air supply port 52 already in outer skin 46 for pneumatic air delivery) and without requiring some type of mechanical attachment which can reduce the structural integrity and aerodynamic performance of wing 12 upon which SLD 30 sensor is located. De-icing assembly 26 also allows de-icer 32 and tab 44 with SLD sensor 34 to be attached concurrently to wing 12 as a single piece instead of a non-integral assembly requiring installation of multiple components to wing 12.

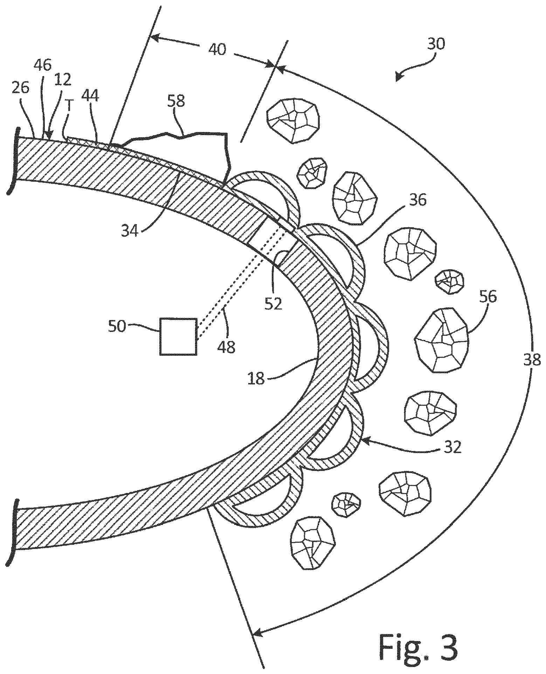

FIG. 3 is a sectional view of de-icer assembly 30 with SLD sensor 34 attached to leading edge 18 of wing 12, taken along line 3-3 of FIG. 2. In FIG. 3, ice chunks 56 are shown formed along de-icer 32 and ice ridge 58 is shown formed along unprotected region 40 of wing 12. Upon the formation of ice chunks 56 along de-icer 32, tubes 36 of de-icer 32 are inflated to expand and break apart ice chunks 56 disengaging ice chunks 56 from de-icer 32 and from wing 12. Tubes 36 are shown in an inflated state in FIG. 2. Unprotected region 40 however, is unprotected by de-icer 32 and ice ridge 58, which includes formation of SLD icing conditions, is able to form aft of aft edge 42 of de-icer 32. With SLD sensors 30 located in unprotected region 40, de-icing assembly 26 can detect and provide notification of the presence of SLD icing conditions so that the pilot can take corrective action and exit the SLD icing conditions.

SLD sensor 34 is positioned inside of tab 44 which extends aft of aft edge 42 of de-icer 32 in a chord-wise direction along wing 12. Thickness T of tab 44 with SLD sensor 34 is approximately 0.15875 centimeters (0.0625 inches), which for example is a same or similar thickness of de-icer 32 in a deflated state. In further embodiments, thickness T of tab 44 can vary to include smaller or larger thicknesses as desired for particular embodiments.

As can be seen in FIG. 3, tab 44 with SLD sensor 34 is placed on top of outer skin 46 and such placement does not require a cut-out, or hole, in outer skin 46. SLD sensor 34 can include a plurality of individual sensors within tab 44. As discussed above, SLD sensor 34 can comprise various types of ice detectors as desired for particular embodiments.

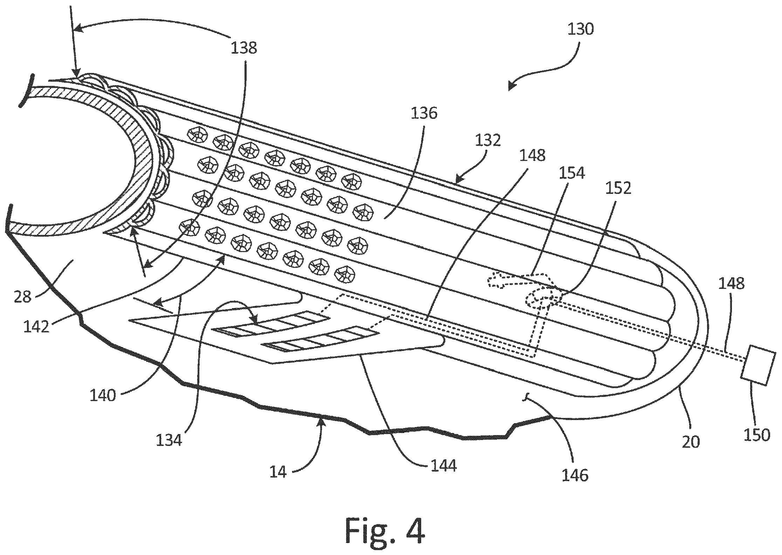

FIG. 4 is a perspective cut-away view of de-icing assembly 130 with de-icer 132 and SLD sensor 134 attached to leading edge 20 of horizontal stabilizer 14. FIG. 4 shows similar elements to those included in FIG. 2, and thus a portion of the elements in FIG. 4 include designation numbers that have been increased by 100 for the corresponding elements between FIGS. 2 and 4. As can be seen in FIG. 4, de-icer 132 includes a pneumatic de-icer with SLD sensor 136 that extend spanwise across leading edge 20 of horizontal stabilizer 14. De-icer 132 protects against formation of ice along leading edge 20 of horizontal stabilizer 14. Formation of ice along leading edge 20 of horizontal stabilizer 14 poses a potential hazard to safe flight by increasing drag, increasing weight, and decreasing lift of horizontal stabilizer 14.

De-icer 132 extends in a chordwise direction across protected region 138. Protected region 138 includes a span of coverage or protection of de-icer 132 and includes an area of horizontal stabilizer 14 that is protected from icing conditions. Unprotected region 140 extends in an aft direction from protected region 138, and includes a region of horizontal stabilizer 14 located aft of aft edge 142 of de-icer 132 that is unprotected from icing conditions. Unprotected region 140 includes an area on horizontal stabilizer 14 that is susceptible to SLD icing conditions because de-icer 132 is positioned on leading edge 20 of horizontal stabilizer 14 and does not extend into unprotected region 140.

Tab 144 is attached to or integrally formed with de-icer 132 and extends from de-icer 132 in an aft direction from aft edge 142 of de-icer 132 and into unprotected region 140 of horizontal stabilizer 14. De-icer 132 and tab 144 are adhesively attached onto outer skin 146 of horizontal stabilizer 14. In one example, liquid cement is applied to both de-icer 132 and to outer skin 146 of horizontal stabilizer 14 and then de-icer 132 is pressed to outer skin 146 of horizontal stabilizer 14. In another example, a pressure sensitive adhesive is applied to de-icer 132 and the during installation of de-icer to outer skin 146 of horizontal stabilizer 14, a release film covering the pressure sensitive adhesive is removed and de-icer 132 is pressed to outer skin 146 of horizontal stabilizer 14. In further embodiments, the type of adhesion can vary to include other types of adhesives and/or methods of adhesion as desired for particular embodiments.

SLD sensor 134 is built into tab 144 by positioning SLD sensor 134 inside of tab 144. SLD sensor 134 is positioned in unprotected region 140 which is located aft of aft edge 142 of de-icer 132. Unprotected region 140 can be located on lower surface 28 of horizontal stabilizer 14, and can additionally or alternatively be located on upper surface 26 of wing 12. The importance of locating SLD sensor 134 in either of these two locations is due to lower surface 28 of horizontal stabilizer 14 and lower surfaces of horizontal stabilizers 14 being critical aerodynamic surfaces where formation of SLD icing conditions could result in hazardous flight conditions. Lower surface 28 of horizontal stabilizer 14 is a critical suction surface where flow separation and loss of lift can occur if ice forms aft of protected region 138 due to flight in SLD conditions. Additionally, SLD sensor 134 can be positioned along an underside of tab 144 or along a top side of tab 144.

### Discussion of Possible Embodiments

The following are non-exclusive descriptions of possible embodiments of the present invention.

A de-icing assembly includes an aircraft with an airfoil. A de-icer is disposed on a leading edge of the airfoil. A tab extends from the de-icer in an aft direction from an aft edge of the de-icer. The de-icer and the tab are adhesively attached onto an outer skin of the airfoil. A supercooled large droplet sensor is built into the tab. The supercooled large droplet sensor is positioned in a location aft of the aft edge of the de-icer.

The de-icing assembly of the preceding paragraph can optionally include, additionally and/or alternatively, any one or more of the following features, configurations and/or additional components:
a further embodiment of the foregoing de-icing assembly, wherein the airfoil can further comprise a wing, wherein the supercooled large droplet sensor can be positioned on an upper surface of the wing;
a further embodiment of any of the foregoing de-icing assemblies, wherein the de-icing assemblies can further comprise wires that can connect the supercooled large droplet sensor to an electrical system of the aircraft; and/or
a further embodiment of any of the foregoing de-icing assemblies, wherein the wires can extend from the supercooled large droplet sensor, through the tab, underneath the de-icer, and through an air supply port in the outer skin of the airfoil, wherein the air supply port can also be used for an air supply to the de-icer.

A method of installing a de-icing assembly includes positioning a supercooled large droplet sensor inside of a tab attached to a de-icer. The de-icer is adhered to a leading edge of an airfoil of an aircraft. The tab of the de-icer is adhered to the airfoil concurrently with adhesion of the de-icer to the airfoil. Adhering the tab includes positioning the supercooled large droplet sensor in a region aft of an aft edge of the de-icer.

The method of the preceding paragraph can optionally include, additionally and/or alternatively, any one or more of the following features, configurations and/or additional components:
a further embodiment of the foregoing method, wherein the method may further comprise feeding wires connected to the supercooled large droplet sensor through an air supply port in a skin of the airfoil, wherein the air supply port can include an air connection for the de-icer.

A de-icing assembly can include a de-icer configured to be disposed on a leading edge of an airfoil. A tab can extend from the de-icer in an aft direction from an aft edge of the de-icer. A supercooled large droplet sensor can be built into the tab. The supercooled large droplet sensor can be positioned in a location aft of the aft edge of the de-icer. An adhesive can be applied to the de-icer and the tab.

The de-icing assembly of the preceding paragraph can optionally include, additionally and/or alternatively, any one or more of the following features, configurations and/or additional components:
a further embodiment of the foregoing de-icing assembly, wherein the de-icing assembly can be configured to position the supercooled large droplet sensor on an upper surface of a wing of an aircraft;
a further embodiment of any of the foregoing de-icing assemblies, wherein the de-icing assembly can be configured to position the supercooled large droplet sensor on a lower surface of a horizontal stabilizer or a wing of an aircraft; and/or
a further embodiment of any of the foregoing de-icing assemblies, wherein the de-icing assemblies can further comprise wires to connect the supercooled large droplet sensor to an electrical system of an aircraft.

While the invention has been described with reference to an exemplary embodiment(s), it will be understood by those skilled in the art that various changes may be made and equivalents may be substituted for elements thereof without departing from the scope of the invention as defined by the claims. In addition, many modifications may be made to adapt a particular situation or material to the teachings of the invention without departing from the scope thereof. Therefore, it is intended that the invention not be limited to the particular embodiment(s) disclosed, but that the invention will include all embodiments falling within the scope of the appended claims.

Any relative terms or terms of degree used herein, such as "substantially", "essentially", "generally", "approximately" and the like, should be interpreted in accordance with and subject to any applicable definitions or limits expressly stated herein. In all instances, any relative terms or terms of degree used herein should be interpreted to broadly encompass any relevant disclosed embodiments as well as such ranges or variations as would be understood by a person of ordinary skill in the art in view of the entirety of the present disclosure, such as to encompass ordinary manufacturing tolerance variations, incidental alignment variations, transient alignment or shape variations induced by thermal, torsional, tensile, compressive, or vibrational operational conditions, and the like. Moreover, any relative terms or terms of degree used herein should be interpreted to encompass a range that expressly includes the designated quality, characteristic, parameter or value, without variation, as if no qualifying relative term or term of degree were utilized in the given disclosure or recitation.

## Claims

1. A de-icing assembly comprising:
a de-icer (32) configured to be disposed on a leading edge (18) of an airfoil (12);
a tab (44) extending from the de-icer in an aft direction from an aft edge (42) of the de-icer;
a supercooled large droplet sensor built into the tab, wherein the supercooled large droplet sensor (34) is positioned in a location aft of the aft edge of the de-icer; and
an adhesive applied to the de-icer and the tab.

2. The de-icing assembly of claim 1, wherein the de-icing assembly is configured to position the supercooled large droplet sensor on an upper surface of a wing of an aircraft.

3. The de-icing assembly of claim 1, wherein the de-icing assembly is configured to position the supercooled large droplet sensor on a lower surface of a horizontal stabilizer or a wing of an aircraft.

4. The de-icing assembly of claim 1, 2 or 3, further comprising:
wires to connect the supercooled large droplet sensor to an electrical system of an aircraft.

5. The de-icing assembly of claim 1, further comprising:
an aircraft (10) having an airfoil (12);
and wherein the de-icer and the tab are adhesively attached onto an outer skin (46) of the airfoil with the adhesive.

6. The de-icing assembly of claim 5, wherein the airfoil comprises:
a wing (12), wherein the supercooled large droplet sensor is positioned on an upper surface of the wing.

7. The de-icing assembly of claim 5, wherein the airfoil comprises:
a horizontal stabilizer (14), wherein the supercooled large droplet sensor (134) is positioned on a lower surface of the horizontal stabilizer.

8. The de-icing assembly of claim 5, 6 or 7, further comprising:
wires (48) connecting the supercooled large droplet sensor to an electrical system (50) of the aircraft.

9. The de-icing assembly of claim 8, wherein the wires (48) extend from the supercooled large droplet sensor (34), through the tab (44), underneath the de-icer (32), and through an air supply port (52) in the outer skin (46) of the airfoil, wherein the air supply port is also used for an air supply to the de-icer.

10. A method of installing a de-icing assembly, the method comprising:
positioning a supercooled large droplet sensor inside of a tab attached to a de-icer;
adhering the de-icer to a leading edge of an airfoil of an aircraft; and
adhering the tab of the de-icer to the airfoil concurrently with adhesion of the de-icer to the airfoil, wherein adhering the tab further comprises:
positioning the supercooled large droplet sensor in a region aft of an aft edge of the de-icer.

11. The method of claim 10, further comprising:
feeding wires connected to the supercooled large droplet sensor through an air supply port in a skin of the airfoil, wherein the air supply port includes an air connection for the de-icer.

## Patentansprüche

1. Enteisungsbaugruppe, umfassend:
einen Enteiser (32), der dazu ausgelegt ist, an einer Vorderkante (18) einer Tragfläche (12) angeordnet zu sein;
eine Lasche (44), die sich von dem Enteiser in einer Rückwärtsrichtung von einer Hinterkante (42) des Enteisers erstreckt;
einen Sensor für unterkühlte große Tropfen, der in die Lasche eingebaut ist, wobei der Sensor (34) für unterkühlte große Tropfen an einer Stelle hinter der Hinterkante des Enteisers positioniert ist; und
ein Klebemittel, das auf den Enteiser und die Lasche aufgebracht ist.

2. Enteisungsbaugruppe nach Anspruch 1, wobei die Enteisungsbaugruppe dazu ausgelegt ist, den Sensor für unterkühlte große Tropfen an einer Oberseite eines Flügels eines Flugzeugs zu positionieren.

3. Enteisungsbaugruppe nach Anspruch 1, wobei die Enteisungsbaugruppe dazu ausgelegt ist, den Sensor für unterkühlte große Tropfen an einer Unterseite eines Höhenleitwerks oder eines Flügels eines Flugzeugs zu positionieren.

4. Enteisungsbaugruppe nach Anspruch 1, 2 oder 3, ferner umfassend:
Drähte, um den Sensor für unterkühlte große Tropfen mit einem Bordnetz eines Flugzeugs zu verbinden.

5. Enteisungsbaugruppe nach Anspruch 1, ferner umfassend:
ein Flugzeug (10) mit einer Tragfläche (12);
und wobei der Enteiser und die Lasche auf eine Außenhaut (46) der Tragfläche mit dem Klebemittel aufgeklebt sind.

6. Enteisungsbaugruppe nach Anspruch 5, wobei die Tragfläche umfasst:
einen Flügel (12), wobei der Sensor für unterkühlte große Tropfen an einer Oberseite des Flügels positioniert ist.

7. Enteisungsbaugruppe nach Anspruch 5, wobei die Tragfläche umfasst:
ein Höhenleitwerk (14), wobei der Sensor (134) für unterkühlte große Tropfen an einer Unterseite des Höhenleitwerks positioniert ist.

8. Enteisungsbaugruppe nach Anspruch 5, 6 oder 7, ferner umfassend:
Drähte (48), die den Sensor für unterkühlte große Tropfen mit einem Bordnetz (50) des Flugzeugs verbinden.

9. Enteisungsbaugruppe nach Anspruch 8, wobei sich die Drähte (48) von dem Sensor (34) für unterkühlte große Tropfen durch die Lasche (44), unter dem Enteiser (32) und durch eine Luftzufuhröffnung (52) in der Außenhaut (46) der Tragfläche erstrecken, wobei die Luftzufuhröffnung zudem für eine Luftzufuhr zum Enteiser verwendet wird.

10. Verfahren zum Installieren einer Enteisungsbaugruppe, wobei das Verfahren umfasst:
Positionieren eines Sensors für unterkühlte große Tropfen im Inneren einer Lasche, die an einem Enteiser angebracht ist;
Verkleben des Enteisers mit einer Vorderkante einer Tragfläche eines Flugzeugs; und
Verkleben der Lasche des Enteisers mit der Tragfläche gleichzeitig mit dem Verkleben des Enteisers mit der Tragfläche, wobei das Verkleben der Lasche ferner umfasst:
Positionieren des Sensors für unterkühlte große Tropfen in einem Bereich hinter einer Hinterkante des Enteisers.

11. Verfahren nach Anspruch 10, ferner umfassend:
Führen von Drähten, die mit dem Sensor für unterkühlte große Tropfen verbunden sind, durch eine Luftzufuhröffnung in einer Haut der Tragfläche, wobei die Luftzufuhröffnung einen Luftanschluss für den Enteiser beinhaltet.

## Revendications

1. Ensemble de dégivrage comprenant :
un dégivreur (32) conçu pour être disposé sur un bord d'attaque (18) d'un profil aérodynamique (12) ;
une patte (44) s'étendant depuis le dégivreur dans une direction arrière à partir d'un bord arrière (42) du dégivreur ;
un capteur de gouttelettes de grande taille en surfusion intégré dans la patte, dans lequel le capteur de gouttelettes de grande taille en surfusion (34) est positionné à un emplacement à l'arrière du bord arrière du dégivreur ; et
un adhésif appliqué sur le dégivreur et la patte.

2. Ensemble de dégivrage selon la revendication 1, dans lequel l'ensemble de dégivrage est conçu pour positionner le capteur de gouttelettes de grande taille en surfusion sur une surface supérieure d'une aile d'un aéronef.

3. Ensemble de dégivrage selon la revendication 1, dans lequel l'ensemble de dégivrage est conçu pour positionner le capteur de gouttelettes de grande taille en surfusion sur une surface inférieure d'un stabilisateur horizontal ou d'une aile d'un aéronef.

4. Ensemble de dégivrage selon la revendication 1, 2 ou 3, comprenant en outre :
des fils pour raccorder le capteur de gouttelettes de grande taille en surfusion à un système électrique d'un aéronef.

5. Ensemble de dégivrage selon la revendication 1, comprenant en outre :
un aéronef (10) ayant un profil aérodynamique (12) ;
et dans lequel le dégivreur et la patte sont fixés de manière adhésive sur un revêtement extérieur (46) du profil aérodynamique avec l'adhésif.

6. Ensemble de dégivrage selon la revendication 5, dans lequel le profil aérodynamique comprend :
une aile (12), dans lequel le capteur de gouttelettes de grande taille en surfusion est positionné sur une surface supérieure de l'aile.

7. Ensemble de dégivrage selon la revendication 5, dans lequel le profil aérodynamique comprend :
un stabilisateur horizontal (14), dans lequel le capteur de gouttelettes de grande taille en surfusion (134) est positionné sur une surface inférieure du stabilisateur horizontal.

8. Ensemble de dégivrage selon la revendication 5, 6 ou 7, comprenant en outre :
des fils (48) pour raccorder le capteur de gouttelettes de grande taille en surfusion à un système électrique (50) de l'aéronef.

9. Ensemble de dégivrage selon la revendication 8, dans lequel les fils (48) s'étendent depuis le capteur de gouttelettes de grande taille en surfusion (34), à travers la patte (44), en-dessous du dégivreur (32), et à travers un orifice d'alimentation en air (52) dans le revêtement extérieur (46) du profil aérodynamique, dans lequel l'orifice d'alimentation en air est également utilisé pour une alimentation en air du dégivreur.

10. Procédé d'installation d'un ensemble de dégivrage, le procédé comprenant :
le positionnement d'un capteur de gouttelettes de grande taille en surfusion à l'intérieur d'une patte fixée à un dégivreur ;
l'adhérence du dégivreur à un bord d'attaque d'un profil aérodynamique d'un aéronef ; et
l'adhérence de la patte du dégivreur au profil aérodynamique simultanément à l'adhérence du dégivreur au profil aérodynamique, dans lequel l'adhérence de la patte comprend en outre :
le positionnement du capteur de gouttelettes de grande taille en surfusion dans une région à l'arrière du bord arrière du dégivreur.

11. Procédé selon la revendication 10, comprenant en outre :
des fils d'alimentation raccordés au capteur de gouttelettes de grande taille en surfusion par un orifice d'alimentation en air dans un revêtement du profil aérodynamique, dans lequel l'orifice d'alimentation en air comporte un raccordement d'air pour le dégivreur.
